# DEMANDE DE BREVET EUROPEEN

(11) **EP 1 243 703 A1**
(43) Date de publication de la demande: **25.09.2002**
(21) Numéro de dépôt: 02290673.9
(22) Date de dépôt: 18.03.2002
(51) Int. Cl.: E02D 29/02, E01F 8/02, B28B 11/06

(54) **Panneau végétalisable, comportant une structure composite solide, destiné aux travaux publics et à la construction**

(30) Priorité: 20.03.2001 FR 0103761
(71) Demandeur: VEGETUDE, 77210 Avon (FR)
(72) Inventeur: Dume, Gérard, 45160 Olivet (FR); Toulic, Olivier, 76190 Ecalles Alix (FR)
(74) Mandataire: Leszczynski, André

(57) **Abrégé**

L'invention concerne un panneau d'habillage (1), destiné au développement de végétaux, dans le domaine des travaux publics et de la construction, comportant, fixée sur un support (5), une structure solide composite (2) constituée d'éléments pierreux légers reliés et rendus solidaires entre eux au moyen d'un agent liant, ladite structure ménageant dans son volume des interstices et pores et comportant des cavités de préférence en forme de cylindres ou de demi-sphères, ménagées sur la face inférieure (11) de la structure, aptes à recevoir un substrat organo-terreux et permettant le développement de végétaux.

## Description

La présente invention concerne le domaine des travaux publics et de la construction mais plus particulièrement celui de panneaux d'habillage végétalisables, c'est-à-dire permettant la culture de végétaux à leur surface.

De tels panneaux peuvent habiller des façades d'immeubles ou d'ouvrages d'art, mais aussi des reliefs naturels, dévégétalisés par divers travaux d'infrastructure, en les recouvrant de végétation. Ils constituent par ailleurs d'excellents isolants du bruit permettant de réaliser des murs anti-bruit pour les routes ou les autoroutes ou, appliqués sur des immeubles, de réguler en outre la température intérieure. Ils répondent donc à des impératifs modernes d'amélioration de l'environnement et de la qualité de l'habitat.

On connaît d'après la revue «Le Moniteur» de Juin 1999 des panneaux d'habillage utilisés pour la végétalisation de façades d'immeubles constitués d'un assemblage de pierres, de sable et de sacs de jute renfermant des graines susceptibles de se développer en plantes de rocailles, ledit assemblage étant pris en sandwich entre un béton de finition et un grillage en acier inoxydable retenant les pierres.

Ce type de panneau est de manutention très difficile du fait de son poids élevé mais de plus sa préparation requiert plusieurs semaines. Par ailleurs, les graines des végétaux destinées à pousser sur le panneau étant incorporées à l'intérieur de sacs de jute, il n'est plus possible, du fait de la structure de ce type de panneau, de changer de culture une fois que celui-ci est réalisé, ni non plus d'utiliser d'autres techniques de culture telles que le bouturage ou le repiquage, limitant ainsi grandement les possibilités d'ornementation.

D'autres procédés de végétalisation ont également été décrits mais ceux-ci nécessitent d'importants moyens mécaniques difficiles à mettre en oeuvre et très coûteux.

On connaît par JP-A-10231576 un panneau d'habillage permettant le développement des végétaux comprenant une couche de béton poreux dans les interstices et pores duquel est mis en place un substrat pour la croissance des plantes.

Un tel panneau n'offre qu'un volume limité pour le substrat et peu d'espace pour le développement des racines des végétaux.

La présente invention a pour objet un panneau d'habillage, destiné au développement de végétaux, dans le domaine des travaux publics et de la construction comportant, fixée sur un support, une structure solide composite constituée d'éléments pierreux légers reliés et rendus solidaires entre eux au moyen d'un agent liant, ladite structure ménageant dans son volume, interstices et pores et comportant des cavités, de préférence en forme de cylindres ou de demi-sphères ménagées sur la face inférieure de la structure, aptes à recevoir un substrat organo-terreux permettant le développement de végétaux.

Les éléments pierreux légers utilisés ainsi que les cavités et interstices contribuent à la légèreté du panneau et par conséquent à sa facilité de manutention, les cavités à la partie inférieure de la structure offrant de plus des espaces de volume important dans lesquels les racines des végétaux peuvent se développer librement au sein du substrat organo-terreux et les pores ouverts permettant aux végétaux d'atteindre la surface extérieure du panneau.

Une telle structure solide composite selon l'invention permet d'éviter l'emploi d'un grillage extérieur destiné à retenir des éléments désolidarisés tels que des pierres et ainsi de réduire à la fois le poids et le coût du panneau.

Par éléments pierreux légers selon l'invention on doit entendre des granulats généralement poreux à pores fermés et/ou ouverts, tels que des schistes expansés, des argiles expansées ou d'autres granulats légers comme les roches pouzzolanes, les laitiers expansés ou les granulats légers utilisés pour la réalisation de bétons légers tels que la pierre ponce et les mélanges de ceux-ci.

La masse volumique apparente (MVA) des granulats est généralement comprise entre environ 300 et 1000 kg/m³ et de préférence entre 400 et 800 kg/m³.

A titre d'exemple on peut utiliser selon l'invention des schistes expansés vendus sous la dénomination de « Granulex® » par la Société Industrielle du Centre (SIC) de MVA comprise entre 600 et 700 kg/m³, qui sont incombustibles, non gélifs, imputrescibles, chimiquement neutres et possédant de plus un coefficient de conductivité thermique faible (0,12 w/m/°C) en faisant de bons isolants thermiques.

Avantageusement, les éléments pierreux ont une granulométrie continue comprise entre environ 0,3 à 50 mm et de préférence de 0,5 à 30 mm.

Selon un mode particulier de réalisation, on utilise selon l'invention un mélange de granulats à pores fermés et de granulats à pores ouverts, la présence des granulats à pores ouverts permettant ainsi une bonne rétention de l'eau et contribuant à la bonne hygrométrie des panneaux.

Selon un premier mode de réalisation de l'invention, l'agent liant permettant de rendre solidaire les éléments pierreux légers est un liant hydraulique à prise généralement rapide disponible dans le commerce sous les dénominations de ciment ou mortier colle. Il s'agit de dérivés de ciments prompts, de liants ternaires ou de ciments blancs.

L'utilisation d'un liant hydraulique de ce type permet d'obtenir une structure composite présentant de bonnes propriétés mécaniques et une excellente pérennité. Cette dernière propriété étant particulièrement recherchée dans la mesure où la longévité des panneaux est un des critères essentiels à satisfaire.

Selon un deuxième mode de réalisation de l'invention, tout particulièrement préféré de par sa facilité de mise en oeuvre et des résultats obtenus, on utilise en tant qu'agent liant un adhésif structural.

Les propriétés auxquelles doivent répondre l'adhésif structural utilisé selon l'invention sont une bonne adhésion sur la plupart des substrats, dans le cas présent la résine doit adhérer aux éléments pierreux, de bonnes propriétés mécaniques, notamment une bonne résistance à la traction et au cisaillement, propriété particulièrement importante du fait que les panneaux sont en général destinés à être installés en position verticale et qu'il peut donc se produire une contrainte de cisaillement dans la structure solide composite. Enfin, l'adhésif structural doit avoir une bonne tenue à l'humidité car les panneaux peuvent être exposés aux intempéries et aux systèmes d'irrigation des végétaux par goutte-à-goutte, mettant en contact l'adhésif structural avec divers mélanges aqueux. Il est donc nécessaire que l'humidité ne puisse pas altérer les propriétés de l'adhésif structural.

Avantageusement, l'adhésif structural utilisé est choisi parmi ceux du type polyester, acrylique, époxyde ou polyuréthanne, répondant ainsi aux qualités recherchées et énoncées ci-dessus. Il peut être du type mono ou bi-composants, de temps de prise plus ou moins rapide, mais de préférence supérieure à 20 mn. Parmi ces adhésifs, on peut notamment citer ceux vendus sous les dénominations de Résine polyester type E ® par la société B. G. Composites.

Selon l'invention, la proportion de l'agent liant par rapport aux éléments pierreux est variable et dépend essentiellement de sa nature. Sa proportion doit toujours être telle qu'il puisse rendre solidaire entre eux les éléments pierreux et laisser subsister dans la structure solide composite des interstices et pores. Selon un mode de réalisation préféré, le rapport en poids : éléments pierreux / agent liant est de préférence compris entre environ 5 à 15.

Le substrat organo-terreux utilisé est de préférence constitué d'un mélange nutritif fournissant aux végétaux toutes les substances dont ils ont besoin pour se développer de la façon la plus satisfaisante. A titre d'exemple on peut utiliser un substrat organo-terreux constitué d'environ 5 parts de tourbe blonde, 5 parts de limon des plateaux et 6 % d'un hydrorétenteur (copolymère acrylamide-acrylate de potassium), soit 25 g pour 5 litres.

La composition du substrat organo-terreux peut varier, notamment en changeant les quantités et la nature du produit hydrorétenteur ou en adaptant l'acidité du mélange à la typicité géologique des régions d'implantation des panneaux, on peut ainsi choisir un substrat organo-terreux reproduisant les propriétés de la terre de la région dans laquelle seront installés les panneaux et ainsi cultiver sur ceux-ci une végétation correspondante à celle de la région.

Le support, sur lequel est fixée la structure solide composite, est de préférence une plaque plane en métal, en une matière plastique rigide ou en béton, ou éventuellement en bois imputrescible d'épaisseur variable mais de préférence comprise entre environ 0,5 et 10 cm, de préférence entre 1 et 5 cm, et s'étendant sur toute ou une partie seulement de la surface de la face inférieure de la structure solide composite. Le support est fixé à la structure solide soit mécaniquement par boulonnage ou rivetage, soit chimiquement par encollage au moyen d'un mortier colle ou d'une résine synthétique telles que celles utilisées en tant qu'adhésif structural.

La taille et la forme du panneau selon l'invention sont fonction de sa destination et peuvent donc être variables.

De préférence, le panneau est de forme rectangulaire et sa taille est généralement comprise entre environ 1,5 et 3 m de long et entre 1 et 2 m de large, et son épaisseur comprise entre environ 5 et 50 cm, de préférence entre 10 et 25 cm.

Avantageusement, le pourcentage volumique des cavités, interstices et pores dans la structure solide composite est compris entre environ 30 et 60 %.

Selon un premier mode de réalisation, le panneau selon l'invention peut être obtenu par le procédé consistant :
- à placer sur une sole, recouverte d'une plaque métallique ou plastique, un cadre horizontal,
- à disposer dans le fond dudit cadre un treillis préformé comportant des creux et des bosses,
- à verser dans le cadre et sur le treillis un mélange préalablement formé d'éléments pierreux légers et de l'agent liant,
- à laisser reposer le mélange jusqu'à prise de l'agent liant et formation de la structure solide composite par solidification,
- à retourner ladite structure et à remplir les cavités formées par les bosses du treillis par un substrat organo-terreux et
- à fixer ladite structure ainsi obtenue sur une plaque support.

Le panneau ainsi obtenu est alors prêt pour son installation sur le site à végétaliser. Préalablement à sa mise en place, on procède alors au remplissage des interstices et pores et on effectue l'ensemencement de façon manuelle ou hydraulique.

Selon un deuxième mode de réalisation, le panneau selon l'invention peut être obtenu par le procédé consistant :
- à placer sur une sole recouverte d'une plaque, métallique ou plastique, un cadre horizontal,
- à verser dans le cadre un mélange préalablement formé d'éléments pierreux légers et de l'agent liant,
- à laisser reposer le mélange jusqu'à prise de l'agent liant et formation de la structure solide composite par solidification,
- à perforer ou fraiser ladite structure sur l'une de ses deux faces pour former des cavités aveugles dans son épaisseur,
- à remplir lesdites cavités ainsi formées par un substrat organo-terreux, et
- à fixer ladite structure ainsi obtenue sur une plaque support.

On procède ensuite, comme selon le premier mode de réalisation.

Selon une forme de réalisation particulière des deux procédés décrits ci-dessus, la plaque métallique ou plastique sur laquelle repose le cadre horizontal peut être du type ajouré par des trous de très petit diamètre.

En utilisant ce type de plaque et à l'aide d'un dispositif approprié, il est alors possible, lors de l'étape de formation de la structure solide composite, d'insuffler de l'air et ainsi favoriser la formation des interstices et pores.

Les panneaux selon l'invention tels que décrits ci-dessus peuvent être installés, après fabrication, à l'état végétalisé ou non végétalisé. Les panneaux sont de préférence mis en place sur le site définitif à l'état non végétalisé ce qui en facilite le transport.

Le type de végétation peut être très varié, il peut s'agir notamment d'un gazon classique, d'un enherbement plurispécifique classique, de plantes grimpantes ou rampantes, d'une rocaille fleurie, d'une végétation saxicole spontanée régionale, d'une végétation comportant des arbrisseaux nains etc.

Comme mentionné précédemment, les panneaux selon l'invention trouvent une application dans divers domaines que ce soit de préférence en extérieur mais également en intérieur.

Dans le domaine de la construction, ils peuvent constituer d'excellents écrans anti-bruit ou visuels à une ou deux faces, des murs de soubassement de bâtiments industriels ou d'habitations.

Ils peuvent être également utilisés à titre décoratif notamment en tant que parement de murs plans ou courbes tels que par exemple sur des châteaux d'eau, en tant que parement de parties d'ouvrages de soutènement tels que par exemple des piles de ponts, des entrées de tunnels ou encore en tant que parement décoratif à l'intérieur de halls de bâtiments.

Selon un mode de réalisation particulier de l'invention, les panneaux peuvent être installés en intégrant avant ou après la mise en place un dispositif d'arrosage automatique notamment du type goutte-à-goutte.

D'autres caractéristiques et avantages, non limitatifs, de la présente invention ressortiront à la lecture de la description détaillée qui va suivre, en se référant aux figures annexées sur lesquelles :
- la figure 1 est une vue schématique en perspective d'un panneau conforme à l'invention et sur lequel pousse de la végétation,
- la figure 2 est une vue schématique et en coupe suivant les traits de coupe II-II d'un panneau tel que représenté sur la figure 1 et selon un premier mode de mise en oeuvre de l'invention,
- la figure 3 est une vue schématique en coupe d'un panneau selon un deuxième mode de mise en oeuvre de l'invention,
- la figure 4 est une vue en perspective d'un dispositif servant à la mise en oeuvre du premier mode de réalisation de l'invention,
- la figure 5 est une vue en perspective de la structure solide composite obtenue selon le premier mode de réalisation de l'invention,
- la figure 6 est une vue en perspective de la structure composite obtenue selon le deuxième mode de réalisation de l'invention, et
- la figure 7 est une vue schématique en coupe d'un exemple d'un mode de fixation d'un panneau conforme à l'invention.

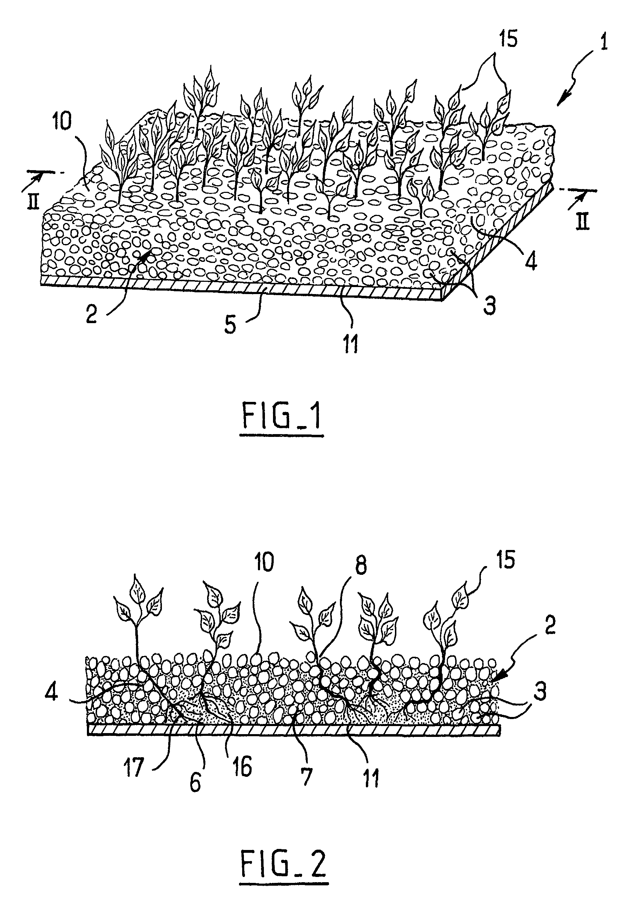

On a représenté sur la figure 1 un panneau 1 selon l'invention se présentant sous la forme d'un parallélépipède rectangle comportant une structure solide composite 2 constituée d'éléments pierreux légers 3 reliés entre eux par un agent liant 4. Lesdits éléments pierreux 3 se présentent sous la forme de granulats légers de granulométrie telle que définie précédemment.

La structure composite solide 2 comporte des interstices 7, représentés à la figure 2, de dimensions variables communiquant entre eux par un réseau de pores, ceux-ci se situant dans le volume de la structure 2, entre les éléments pierreux ; les interstices et pores venant affleurer sur la face supérieure de la structure solide composite. L'ensemble des interstices 7 et des pores peut occuper entre environ 10 et 30 % du volume global de la structure solide composite 2.

Les interstices et pores créés au sein de la structure solide composite permettent le passage des tiges et racines des plantes 15.

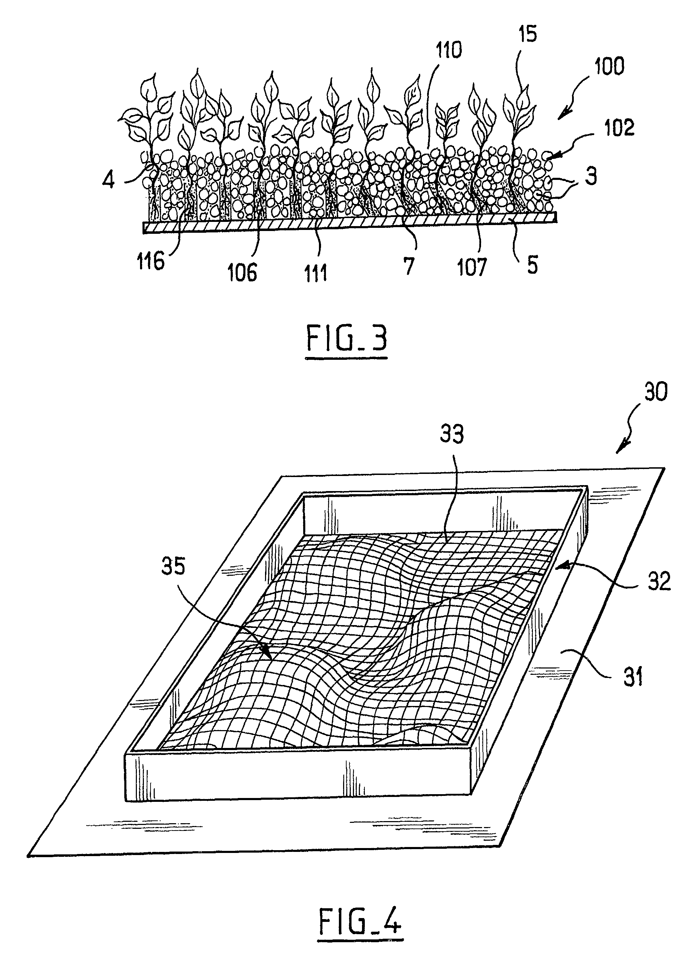

La structure solide composite 2 comporte en outre des cavités 6, se situant sur la face inférieure 11 de la structure 2 et pouvant être de formes diverses, par exemple en forme de demi-sphères comme représenté sur la figure 2 ou en forme de cylindres d'axe perpendiculaire à la base du support 5, telles que les cavités 106 représentées à la figure 3 ou en forme de cylindres faisant un angle inférieur à 90° par rapport à la base du support 5, telles que les cavités 107 représentées à la figure 3. Cette dernière disposition des cavités est plus particulièrement satisfaisante lorsque le panneau 1 est posé dans une position sensiblement verticale, car elle permet un meilleur écoulement des liquides d'irrigation. Le volume des cavités 6, 106 et 107 est variable et peut être compris entre environ 250 et 3 000 cm³. Les racines 17 des plantes 15 viennent se développer et puiser leur besoin nutritif dans les cavités 6, 106 et 107 comportant le substrat organo-terreux, ce dernier étant également présent dans les interstices et pores décrits ci-dessus.

Le panneau 1 comporte un support 5 fixé à la structure solide composite 2 sur sa face inférieure 11, le support 5 s'étendant ici sur toute la surface de la structure solide composite 2. Il est constitué de préférence de métal, de plastique ou de béton, d'épaisseur variable.

La figure 4 représente un dispositif 30 utilisé pour la réalisation de la structure composite 2. Il comporte une plaque plastique ou métallique 31, de forme rectangulaire sur laquelle repose horizontalement, un cadre 32 de dimension intérieure qui correspond à celle souhaitée pour la structure solide composite 2.

Le cadre 32 peut être réalisé en divers matériaux notamment en métal ou en bois. Il est souhaitable d'en enduire les parois d'une substance anti-adhésive par exemple d'une huile afin de faciliter ultérieurement le démoulage de la structure composite.

Un treillis 33 en acier inoxydable, de côté de maille sensiblement inférieure à la granulométrie des éléments pierreux, est préformé de manière à comporter des bosses 35 et est disposé reposant au fond du cadre 32. Sur cette structure de cadre est alors versé un mélange préalablement dosé des éléments pierreux légers et de l'agent liant. Une fois le cadre rempli et égalisé, on laisse reposer pendant un temps suffisant permettant la prise de l'agent liant et rendant solidaires entre eux les éléments pierreux ce qui conduit ainsi à la formation de la structure solide composite 2.

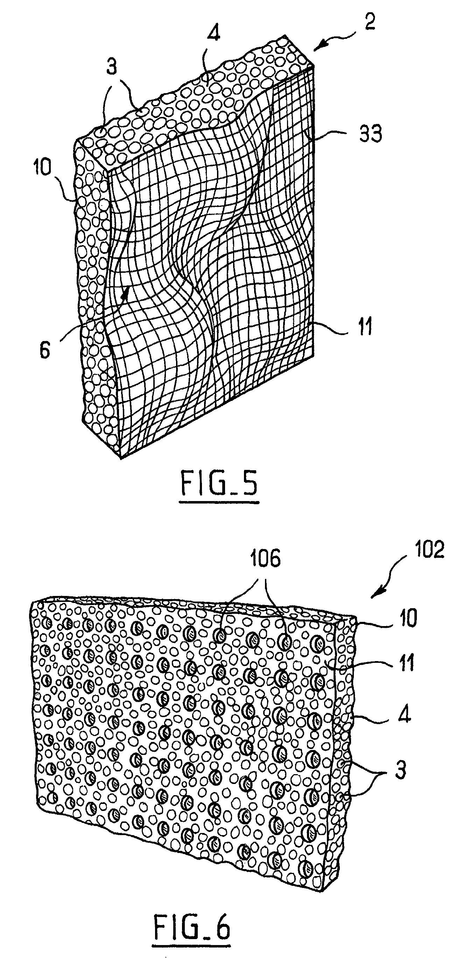

La structure solide composite 2 est alors extraite du cadre 32, et a la forme telle que représentée sur la figure 5. Elle est alors retournée et l'on introduit le substrat organo-terreux dans les cavités 6 formées par les bosses 35 du treillis 33.

On fixe alors la plaque support 5 sur la face inférieure 11 de la structure 2 soit par encollage, soit par boulonnage ou rivetage.

Après fixation de la plaque support, on retourne à nouveau l'ensemble de manière à ce que la face libre 10 de la structure solide composite soit tournée vers le haut et on remplit les interstices et pores présents sur la face 10 d'une substance hydrorétentrice, par exemple du Stocksorb® et on les sature par une bouillie de limons.

En vue de mettre en oeuvre le deuxième mode de réalisation, on peut opérer d'une manière similaire en utilisant le dispositif 30 décrit précédemment mais en l'absence du treillis intérieur 33. On obtient ainsi, après démoulage, une structure solide composite 102 telle que représentée à la figure 6 que l'on peut percer, suivant l'une de ses deux faces, de façon à former des cavités 106 ou 107. Ensuite, de la même manière que décrite précédemment, on introduit un substrat organo-terreux dans les cavités 106 ou 107 et on fixe une plaque support sur la face inférieure 11 et, après retournement, on remplit les interstices et pores présents sur la face 10, opposée à celle du perçage, d'un mélange d'une substance hydrorétentrice et d'une bouillie de limons.

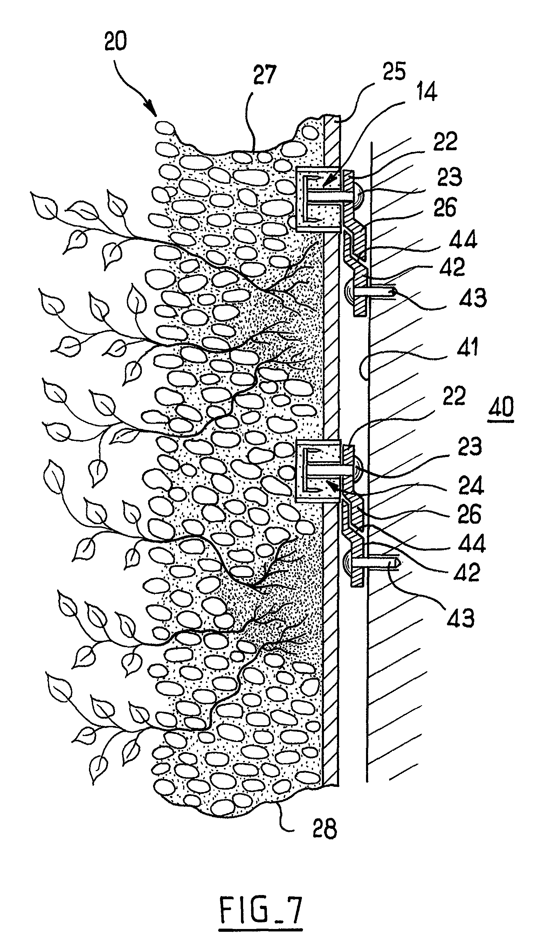

On a représenté sur la figure 7, à titre d'exemple uniquement, un mode de fixation d'un panneau d'habillage végétalisable selon l'invention sur un élément de construction 40, par exemple un mur vertical et plan. Un panneau 20 conforme à l'invention, comporte plusieurs inserts 24 sur la face comportant le support 25 et sur lesquels sont fixés horizontalement, au moyen de boulons de fixation 23, des rails 22 comportant une partie 26 faisant saillie vers le bas. Le mur 40 comporte une surface 41, par exemple plane et verticale, sur laquelle sont assujettis des rails 42 au moyen de boulons de fixation 43, lesdits rails 42 comportant un décrochement 44 apte à ménager un appui bas et latéral aux parties 26 des rails 22 formant ainsi un mode de fixation du panneau 20 à l'élément de construction 40. Les rails 22 peuvent en particulier être décalés de manière à permettre l'écoulement des liquides servant à l'irrigation du panneau. Le panneau 20 comporte de plus une mortaise supérieure 27 concave et un tenon 28 s'étendant tous les deux sur toutes les longueur et largeur du panneau de manière à pouvoir fixer des panneaux par exemple sur toute la hauteur d'un mur, la mortaise d'un panneau coopérant avec le tenon du panneau placé au-dessus.

Afin d'illustrer l'invention, on va maintenant donner plusieurs exemples de préparation des panneaux d'habillage végétalisables selon l'invention.

### Exemple 1

Un panneau d'habillage de taille 2 x 1 m et d'une épaisseur de 20 cm a été réalisé en utilisant un cadre reposant sur une plaque métallique dans lequel a été introduit un treillis constitué d'un grillage métallique, préformé à la main, à mailles carrées de 12 mm de côté, ce treillis comportant des bosses d'environ 10 cm de diamètre et de 1,5 cm de profondeur.

Après avoir disposé le treillis dans le fond du cadre, on a alors versé un mélange préalablement formé constitué de 190 kg de Granulex® vendu par la Société Industrielle du Centre (SIC) et de 26 kg d'un adhésif structural du type polyester vendu sous la dénomination de Résine polyester type E ® par la société B. G. Composites.

Après égalisation du mélange dans le cadre, on a laissé reposer pendant environ 6 heures jusqu'à prise complète de l'adhésif et solidification de la structure. On a ensuite procédé au démoulage de la structure solide composite ainsi formée puis au remplissage des cavités, créées par le treillis, à l'aide d'un substrat organo-terreux.

Cette opération terminée, on a alors fixé la structure composite sur une plaque support de béton de même taille et de 1,5 cm d'épaisseur, celle-ci étant jointe à la structure solide composite à l'aide d'un mortier d'encollage.

Après prise du mortier, le panneau a été retourné et on peut à ce stade, si on le souhaite, remplir les interstices et les pores de la face supérieure d'une part par une substance hydrorétentrice telle que le produit vendu sous la dénomination de Stocksorb 400 K par la société Stockhausen et d'autre part par une bouillie liquide de limons.

Le panneau ainsi obtenu peut alors être transporté sur son site d'implantation où il est alors végétalisé avant ou après son installation définitive. On peut si on le souhaite végétaliser le panneau avant son transport et son installation, ceci en vue d'obtenir un effet de couverture végétale immédiat.

### Exemple 2

Une panneau d'habillage de taille 2 x 1 m et d'une épaisseur de 10 cm a été réalisé en utilisant un cadre reposant sur une plaque métallique dans lequel on a alors versé un mélange préalablement formé, constitué de 130 kg de Granulex® vendu par la Société Industrielle du Centre (SIC) et de 19 kg d'un adhésif structural du type polyester vendu sous la dénomination de Résine polyester type E ®par la société B. G. Composites

Après égalisation du mélange dans le cadre, on a laissé reposer pendant environ 6 heures jusqu'à prise complète de l'adhésif et solidification de la structure solide composite. On a ensuite procédé au démoulage de la structure ainsi formée et on a alors percé, perpendiculairement à la structure plusieurs cavités cylindriques d'un diamètre d'environ 20 mm et d'une profondeur d'environ 7 cm.

On a ensuite injecté sous pression, dans les cavités créées par perçage, une pâte obtenue en mélangeant un substrat organo-terreux avec de l'eau dans une proportion d'environ 50 %.

Cette opération terminée, on a fixé sur la structure solide composite une plaque support de béton de même dimension et de 1,5 cm d'épaisseur, celle-ci étant solidarisée à la structure solide composite à l'aide d'une résine structurale telle que définie ci-dessus.

Après prise de la résine, le panneau ainsi obtenu peut comme dans l'exemple précédent, être transporté sur son site d'implantation où il est alors végétalisé, avant ou après son installation définitive, ou être végétabilisé avant son transport et son installation sur le site à couvrir.

## Revendications

1. Panneau d'habillage (1), destiné au développement de végétaux, dans le domaine des travaux publics et de la construction, **caractérisé par le fait qu'**il comporte, fixée sur un support (5), une structure solide composite (2) constituée d'éléments pierreux légers reliés et rendus solidaires entre eux au moyen d'un agent liant, ladite structure ménageant dans son volume des interstices (7) et pores et comportant des cavités (6, 106,107) de préférence en forme de cylindres ou de demi-sphères, ménagées sur la face inférieure (11) de la structure, aptes à recevoir un substrat organo-terreux et permettant le développement de végétaux.

2. Panneau selon la revendication 1, **caractérisé par le fait que** les éléments pierreux légers sont des granulats de schistes expansés ou d'argiles expansées ou des mélanges de ceux-ci.

3. Panneau selon l'une quelconque des revendications précédentes, **caractérisé par le fait que** les éléments pierreux légers sont des granulats à pores fermés et/ou ouverts ou d'un mélange de ceux-ci.

4. Panneau selon l'une quelconque des revendications précédentes, **caractérisé par le fait que** les éléments pierreux ont une granulométrie continue comprise entre environ 0,3 à 50 mm et de préférence de 0,5 à 30 mm.

5. Panneau selon l'une quelconque des revendications précédentes, **caractérisé par le fait que** les éléments pierreux ont une masse volumique apparente comprise entre 300 et 1 000 kg/m³ et de préférence entre 400 et 800 kg/m³.

6. Panneau selon l'une quelconque des revendications précédentes, **caractérisé par le fait que** l'agent liant est un liant hydraulique choisi pour les ciments ou mortiers colles.

7. Panneau selon l'un quelconque des revendications 1 à 5, **caractérisé par le fait que** l'agent liant est un adhésif structural du type polyester, acrylique, époxyde ou polyuréthanne mono ou bicomposant.

8. Panneau selon l'une quelconque des revendications précédentes, **caractérisé par le fait que** le support est en métal, en une matière plastique, en béton ou en un bois imputrescible.

9. Panneau selon l'une quelconque des revendications précédentes,
**caractérisé par le fait que** le support a une épaisseur comprise entre environ 0,5 et 10 cm et s'étend sur toute ou une partie de la surface de la structure composite.

10. Panneau selon l'une quelconque des revendications précédentes, **caractérisé par le fait que** le support est fixé à la structure composite soit mécaniquement par boulonnage ou rivetage, soit chimiquement au moyen d'un mortier ou d'une résine.

11. Panneau selon l'une quelconque des revendications précédentes, **caractérisé par le fait que** son épaisseur est comprise entre environ 5 et 50 cm.

12. Panneau selon l'une quelconque des revendications précédentes, **caractérisé par le fait que** le pourcentage volumique des cavités, interstices et pores dans la structure solide composite est compris entre environ 30 et 60 %.

13. Procédé de fabrication d'un panneau selon l'une quelconque des revendications précédentes, **caractérisé par le fait qu'**il comporte les étapes suivantes consistant :
(i) à placer sur une sole, recouverte d'une plaque métallique ou plastique, un cadre horizontal,
(ii) à disposer dans le fond dudit cadre un treillis préformé comportant des creux et des bosses,
(iii) à verser dans le cadre et sur le treillis un mélange préalablement formé d'éléments pierreux légers et d'un agent liant,
(iv) à laisser reposer le mélange jusqu'à prise de l'agent liant et formation de la structure solide composite, par solidification,
(v) à retourner ladite structure et à remplir les cavités, formées par les bosses du treillis, par un substrat organo-terreux, et
(vi) à fixer ladite structure ainsi obtenue sur une plaque support.

14. Procédé de fabrication d'un panneau selon l'une quelconque des revendications 1 à 12, **caractérisé par le fait qu'**il comporte les étapes suivantes consistant :
(i) à placer sur une sole, recouverte d'une plaque métallique ou plastique, un cadre horizontal,
(ii) à verser dans le cadre un mélange préalablement formé d'éléments pierreux légers et d'un agent liant,
(iii) à laisser reposer le mélange jusqu'à prise de l'agent liant et formation de la structure solide composite par solidification,
(iv) à perforer ou fraiser ladite structure sur l'une de ses deux faces pour former des cavités aveugles dans son épaisseur,
(v) à remplir lesdites cavités ainsi formées par un substrat organo-terreux, et
(vi) à fixer ladite structure ainsi obtenue sur une plaque support.

15. Procédé selon l'une quelconque des revendications 13 et 14, **caractérisé par le fait que** le mélange d'éléments pierreux légers et d'agent liant est utilisé en un rapport en poids : éléments pierreux / agent liant compris entre environ 5 à 15.
